Europäisches Patentamt

European Patent Office

Office européen des brevets

(19)

(11) Veröffentlichungsnummer : **0 043 090**
**B1**

(12) **EUROPÄISCHE PATENTSCHRIFT**

(45) Veröffentlichungstag der Patentschrift :
**11.12.85**

(21) Anmeldenummer : **81104854.5**

(22) Anmeldetag : **23.06.81**

(51) Int. Cl.⁴ : **F 16 K 11/10, F 16 K 17/10,
F 15 B 13/042// B30B15/14**

(54) Vorgesteuertes 3/2-Wege-Sitzventil.

(30) Priorität : **26.06.80 DE 3023890**

(43) Veröffentlichungstag der Anmeldung :
**06.01.82 Patentblatt 82/01**

(45) Bekanntmachung des Hinweises auf die Patenterteilung : **11.12.85 Patentblatt 85/50**

(84) Benannte Vertragsstaaten :
**BE CH FR LI NL SE**

(56) Entgegenhaltungen :
**DE-A- 2 625 272
US-A- 3 695 293
US-A- 3 792 715**

(73) Patentinhaber : **Leikauf, Udo
Alemannenstrasse 25
D-7148 Remseck 4 (DE)**

(72) Erfinder : **Leikauf, Udo
Alemannenstrasse 25
D-7148 Remseck 4 (DE)**

(74) Vertreter : **Schmid, Berthold et al
Patentanwälte Dipl.-Ing. B. Schmid Dr. Ing. G. Birn
Dipl.-Phys. H. Quarder Falbenhennenstrasse 17
D-7000 Stuttgart 1 (DE)**

**Beschreibung**

Die Erfindung bezieht sich auf ein vorgesteuertes 3/2-Wege-Sitzventil, vorzugsweise ein Pressensicherheitsventil, mit einem Steuerkanal für das Steuermedium, einem Eintrittskanal sowie wenigstens einem Austrittskanal für das durchfließende Medium, wobei in einem diese Kanäle aufweisenden Gehäuse ein rohrförmiger Steuerkolben verschiebbar gelagert ist, dessen eines Ende ein erstes Verschlußorgan bildet, welches bei vollem Druck im Steuerkanal an einem ersten Ventilsitz anliegt und vom Druck des durchfließenden Mediums beaufschlagt ist. Ein derartiges Ventil ist durch die US-A-3 695 293 bekannt geworden. Es hat die Aufgabe, einen Flüssigkeitsstrom in zwei Teilströme zu unterteilen, die wechselweise über zwei Ausgänge des Ventils ausströmen können. Demnach kann dieses Ventil mit zwei verschiedenen Verbrauchern verbunden werden, die abwechselnd mit dem Medium versorgt werden. Es gibt nun Anwendungsfälle für derartige Ventile, bei denen einem Verbraucher das Medium nur für eine gewisse Zeitspanne zugeführt werden soll. Dies muß nicht notwendigerweise periodisch erfolgen. Beim vorbekannten Ventil wird zwar ein- und demselben Verbraucher das Medium auch entweder zugeführt oder abgesperrt, doch besitzt es, wie gesagt, zwei Ausgänge und seine Funktion wäre gestört, wenn man einen dieser Ausgänge einfach verschließen und es lediglich noch in Verbindung mit einem einzigen Verbraucher verwenden würde.

Die Aufgabe der Erfindung besteht infolgedessen darin, ein vorgesteuertes 3/2-Wege-Sitzventil der eingangs genannten Art so weiterzubilden, daß es in Verbindung mit lediglich einem einzigen Verbraucher verwendet werden kann, dem man wechselweise das durchfließende Medium zuführt oder absperrt.

Zur Lösung dieser Aufgabe wird erfindungsgemäß vorgeschlagen, daß das vorgesteuerte 3/2-Wege-Sitzventil gemäß dem Oberbegriff des Anspruchs 1 entsprechend dem kennzeichnenden Teil dieses Anspruchs ausgebildet ist.

Mit diesem vorgesteuerten 3/2-Wege-Sitzventil ist es möglich, dem einzigen daran angeschlossenen Verbraucher das Medium entweder zuzuführen oder ihn drucklos zu halten bzw. zu machen. Bevorzugtes Anwendungsgebiet sind Pressen, und dort speziell das Öffnen oder Schließen einer Bremse und/oder einer Kupplung der Presse. Beim durchfließenden Medium kann es sich um Druckluft oder eine unter Druck stehende Flüssigkeit handeln, wobei allerdings die Druckluft den Vorteil hat, daß man keine Rückführleitung benötigt. In der Freigabestellung des Ventils strömt das Medium vom Eintrittskanal durch das 3/2-Wege-Sitzventil hindurch zu dessen Austrittskanal und von dort zum Verbraucher. Die Betätigung des Ventils erfolgt aufgrund seiner vorgesteuerten Ausbildung unter Verwendung mindestens eines Hilfsventils, das man beispielsweise von Hand betätigen kann. Je nach Stellung dieses Hilfsventils gibt man den Zustrom des Mediums zum Verbraucher frei oder sperrt ihn wieder ab.

Das erfindungsgemäße vorgesteuerte 3/2-Wege-Sitzventil zeichnet sich durch einen vergleichsweise einfachen Aufbau und damit geringe Fertigungskosten und Störanfälligkeit aus. Außerdem hat es eine kurze Ansprechzeit, was besonders dann wichtig ist, wenn es sich bei dem Verbraucher um eine Bremse einer Arbeitsmaschine handelt, die möglichst rasch, wenn nicht gar schlagartig eingesetzt werden soll. Letzteres gilt beispielsweise bei einem Unfall. Sinngemäßes gilt auch bei Betätigung einer Kupplung, mit deren Hilfe man die Arbeitsmaschine von ihrem Antrieb trennt.

Wenn das Hilfsventil selbsttätig zurückstellt, so erfolgt der weitere Antrieb der Arbeitsmaschine in dem Moment, in dem das Hilfsventil von der Bedienungsperson freigegeben wird.

Der Druck im Eintrittskanal und der am Steuerkanal anstehende Steuerdruck sind in der Ausgangsstellung des Ventils und des Hilfsventils so gewählt, daß in Verbindung mit den wirksamen Flächen der Steuerdruck über eine Ringschulter des Steuerkolbens diesen bei voll wirksamem Vordruck im Eintrittskanal in der Schließlage hält. Sobald man den Steuerkanal drucklos macht, bewirkt der Vordruck im Eintrittskanal ein Verschieben des Steuerkolbens im Sinne einer Öffnung des ersten Verschlußorgans, wobei der Steuerkolben so lange verschoben wird, bis das zweite Verschlußorgan in die Schließstellung gekommen ist. Das von der Druckquelle kommende Medium fließt nunmehr durch das geöffnete, erste, aus dem ersten Ventilsitz und dem ersten Verschlußorgan gebildete Ventil in den oder die ersten Radialkanäle des Steuerkolbens und des Zusatzkolbens in den Axialkanal sowie die zweiten Radialkanäle zum Austrittskanal und zum Verbraucher.

Selbstverständlich ist der Zusatzkolben im Steuerkolben abgedichtet geführt, so daß das Medium von den ersten Radialkanälen nur über den Axialkanal des Zusatzkolbens zu den zweiten Radialkanälen fließen kann. Die zweiten Radialkanäle sind in jeder möglichen Relativlage von Zusatzkolben und Steuerkolben immer strömungsverbunden, während die ersten Radialkanäle des Zusatzkolbens nur dann in Strömungsverbindung mit den ersten Radialkanälen des Steuerkolbens stehen, wenn das dritte, aus dem dritten Verschlußorgan und dem dritten Ventilsitz gebildete Ventil wenigstens teilweise geöffnet ist. Demnach kann also das Druckmedium selbst dann nicht zum Austrittskanal fließen, wenn zwar das erste Ventil geöffnet, jedoch das dritte geschlossen ist. Im übrigen liegt ein besonderer Vorteil dieses Ventils darin, daß zwei Kolben gegenläufige Arbeitsbewegungen durchführen und sich somit die Ansprechzeit gegenüber einer Ausbildung mit nur einem Steuerkolben etwa halbiert. Wenn der Steuerkanal drucklos gemacht und der zusätzliche Steuerkanal druckbeaufschlagt wird, so bewirkt der Druckwegfall an der Ringschulter des Steuerkolbens dessen Verschiebung in Öffnungsrichtung des ersten Ventils. Die Einleitung des Steuerdrucks in den zusätzlichen Steuerkanal hat hingegen ein Verschieben des Zusatzkolbens gegen den Ventilsitz des ersten Ventils hin zur Folge. Deshalb sollte der Steuerdruck vom Steuerkanal auf den zusätzlichen Steuerkanal und umgekehrt ohne Verzögerung umgeschaltet werden. Gibt man nachfolgend den Druck wieder in den Steuerkanal bei gleichzeitiger Entlüftung des zusätzlichen Steuerkanals, so wird über die Ringschulter des Steuerkolbens letzterer wieder in die Schließstellung des ersten Ventils überführt, während sich der Zusatzkolben teilweise wieder aus dem Steuerkolben herausbewegt, bis das dritte, durch das dritte Verschlußorgan und den dritten Ventilsitz gebildete Ventil verschlossen ist.

Mit Hilfe des vierten, aus dem vierten Ventilsitz und dem vierten Verschlußorgan gebildeten Ventils kann man verhindern, daß sich der Druck des über den Austrittskanal abströmenden Mediums auch noch an der Stirnseite des Steuerkolbens auswirkt. Zudem kann man damit auch einen Strömungsweg absperren, den man in anderen Betriebszuständen oder auch bei einem Fehlverhalten des oder der Kolben offenhalten will, um dadurch einen Druckaufbau im Austrittskanal zu verhindern. Dies setzt voraus, daß die Abströmseite dieses vierten Ventils mit einem weiterführenden Kanal, nämlich dem erwähnten Entlüftungskanal, in Verbindung steht. Eine Strömungsverbindung zwischen dem Entlüftungskanal zu dem zusätzlichen Steuerkanal wird durch das von der Druckfeder abgewandte, verdickte, über den Steuerkolben überstehende Ende des Zusatzkolbens in all seinen Verschiebestellungen verhindert.

Eine weitere Ausgestaltung der Erfindung sieht vor, daß der Austrittskanal in den durch das Gehäuse, das von der Druckfeder abgewandten Ende des Zusatzkolbens und den Topfrand des Steuerkolbens gebildeten, ringförmigen zweiten Gehäuseraum mündet, der bei geöffnetem zweiten Verschlußorgan sowie geschlossenem vierten Verschlußorgan über einen fünften Gehäuseraum mit dem Austrittskanal verbunden ist. Wenn der Entlüftungskanal beispielsweise ins Freie mündet, so hat man über diesen, den zweiten Gehäuseraum und bei geöffnetem zweitem Verschlußorgan sowie geschlossenem vierten Verschlußorgan, den fünften Gehäuseraum, eine einwandfreie Entlüftung des Austrittskanals. Dies ist im Hinblick auf die sichere Arbeitsweise dieses Ventils sowohl beim Funktionieren aller Teile als auch bei einem Fehlverhalten der beiden Kolben von großer Wichtigkeit.

In dieser Richtung zielt eine Weiterbildung der Erfindung, welche darin besteht, daß sich im Bereich der zweiten Radialkanäle des Steuer- und des Zusatzkolbens zwischen diesen Radialkanälen der vierte, als Ringraum gestalteter Gehäuseraum befindet, der die Zuströmseite des vierten Ventilsitzes bildet. Damit hat man zwei getrennte Wege für die Entlüftung des Austrittskanals, d. h. dessen Verbindung mit dem Entlüftungskanal zur Verfügung. Wenn also bei einem Fehlverhalten der Kolben beispielsweise das zweite Verschlußorgan geschlossen bleibt, so bleibt für die Entlüftung der Weg über das vierte Verschlußorgan und umgekehrt. In der normalen Umschaltlage beider Kolben, d. h. bei einer Druckbeaufschlagung des zusätzlichen Steuerkanals, sind ja bekanntlich das zweite und das vierte Verschlußorgan geschlossen, während diese Ventile beide geöffnet sind, wenn bei störungsfreiem Arbeiten das erste Verschlußorgan geschlossen ist.

Das in der vorstehend geschilderten Weise insgesamt ausgestattete Ventil ermöglicht demnach nur bei einwandfreiem Arbeiten beider Kolben einen Druckaufbau im Austrittskanal, während bei jedem Fehlverhalten des einen oder anderen oder auch beider Kolben, sei es in der Ausgangsstellung oder zu Beginn des Rückstellens oder auch in irgend einer Zwischenstellung, sich im Austrittskanal kein oder zumindest kein zu Arbeitszwecken am Verbraucher ausnutzbarer Druck ausbilden kann. Somit zeichnet sich dieses Ventil nicht nur durch eine besonders einfache Konstruktion, sondern auch eine extrem kurze Ansprechzeit und absolute Funktionssicherheit aus.

Eine andere Ausbildung der Erfindung sieht vor, daß in den Vordruckraum des ersten Ventilsitzes ein nach außen gehender Hilfskanal mündet, dessen äußeres Ende mit einem Speicher verbindbar ist. Die Verwendung solcher Speicher ist insbesondere bei sogenannten Pressen-Sicherheitsventilen, die über zwei Hilfsventile gesteuert werden, üblich. Wenn man nun aufgrund dieses Hilfskanals den Speicher sehr nahe, möglichst unmittelbar an das Ventil heranbringen kann, so kommt das einer kurzen Ansprech- oder Schaltzeit sehr zugute, was eine weitere Erhöhung der Sicherheit dieses Ventils bedeutet.

Eine weitere Variante der Erfindung ist dadurch gekennzeichnet, daß in einen Verbindungskanal zwischen dem Austrittskanal und dem Hinterdruckraum des ersten Ventilsitzes ein mit einem Funktions- Überwachungsgerät verbundener Druckschalter eingesetzt ist. Dieser wird von den im Hinterdruckraum des ersten Ventils und im Austrittskanal jeweils herrschenden Mediendrücken gesteuert, und sein jeweiliger Schaltzustand gibt Auskunft über das einwandfreie Arbeiten der beiden Kolben und auch darüber, ob einer der beiden Kolben seinen nach der Umsteuerung zu vollziehenden Hub möglicherweise nur teilweise oder auch garnicht durchgeführt hat. Dieser Druckschalter kann in bekannter Weise mit einer Anzeige- oder Alarmvorrichtung gekuppelt werden, um der gegebenenfalls auftretenden Störung unverzüglich nachgehen zu können. Irgendwelche Nachteile am Verbraucher sind bei einem Versagen des erfindungsgemäßen Ventils, wie gesagt, nicht zu erwarten, jedoch erhält der Verbraucher keine Druckluft mehr, wenn einer der Kolben klemmt oder eventuell auch eines der Hilfsventile ausfällt.

Eine andere Ausgestaltung der Überwachungseinrichtung für das ordnungsgemäße Arbeiten dieses Ventils erhält man dadurch, daß der Zusätzkolben mit einer durch das Gehäuse hindurchgeführten Kolbenstange verbunden ist, deren an ihrem außen gelegenen Teil angebrachtes Schaltglied mit einem Schalter zusammenwirkt, welcher mindestens zwei in Verschieberichtung hintereinander gelegene Schaltpositionen aufweist, wobei der Abstand der Schaltpositionen etwa dem der Relativbewegung der beiden Kolben entspricht. Bei ungestörtem Betrieb befindet sich also das Schaltglied vor Beginn des Umschaltens der Hilfssteuerventile entweder in der einen oder in der anderen Schaltposition. Solange das Ansteuern der beiden Schaltpositionen synchron mit dem Umschalten der Hilfssteuerventile verläuft, kann man davon ausgehen, daß der Betrieb störungsfrei ist. Im anderen Falle kann man aus dem unregelmäßigen Verhalten dieses Überwachungsschalters bzw. dem Wegfall seiner Umschaltung auf eine Störung schließen. Durch eine geeignete Schaltung, in welche dieser Schalter einbezogen ist, kann man zum Abschalten der Presse ausnutzen und/oder einen Alarm auslösen oder das Fehlverhalten zumindest optisch bzw. akustisch zur Anzeige bringen.

· Eine weitere Ausbildung dieser Sicherheits- und ·Überwachungseinrichtung besteht darin, daß der Schalter zwischen zwei in Verschieberichtung ˙ hintereinander angeordneten Zusatzschaltern gelegen ist, wobei im Falle einer Fehlfunktion am Ende des Kolbenhubs des korrekt arbeitenden Kolbens das Schaltglied dem einen oder dem anderen Zusatzschalter zugeordnet ist. Daß beide Kolben gleichzeitig klemmen bzw. ihre vorgesehene Verschiebebewegung nicht ausführen, ist ziemlich unwahrscheinlich. Insofern kann man also davon ausgehen, daß nach dem Umsteuern der Hilfsventile zumindest einer der beiden Kolben seinen vorgesehenen Kolbenhub vollständig ausführt. Je nachdem, ob dies nun der Steuer- oder der Zusatzkolben ist, wird das Schaltglied einem der beiden Zusatzschalter zugeordnet. Das Schaltglied führt also in dem betreffenden Fall einen größeren Hub durch als im Normalbetrieb. Der vom Schaltglied betätigte Zusatzschalter kann die Presse abschalten und das nachfolgende Einschalten solange verhindern, bis nach Fehlerbeseitigung die Freigabe erfolgt, indem beispielsweise eine Sperre am Schalter gelöst wird. Denkbar ist auch wieder das Auslösen eines optischen und/oder akustischen Signals.

Eine weitere bevorzugte Ausführungsform der Erfindung sieht vor, daß bei einem Ventil mit zwei Hilfsventilen, von denen selbstverständlich auch jedes zwei Ausgänge hat, welche wechselweise unter Druck stehen, die ersten Ausgänge beider Hilfsventile gemeinsam in den ersten Steuerkanal münden und jeder zweite Ausgang der Hilfsventile an je einen Eingang eines Wechselventils geführt ist, dessen Ausgang mit dem zweiten Steuerkanal verbunden ist. Bei diesen Hilfsventilen handelt es sich um sogenannte Vier/Zweiwege-Steuerventile, und insgesamt ergibt dies vorzugsweise ein hilfsventilgesteuertes Drei-Wege-Pressen-Sicherheitsventil. In diesem speziellen Anwendungsfall muß die Bedienungsperson der Presse mit jeder Hand einen Betätigungshebel niederdrücken, und jeder dieser Betätigungshebel steuert eines der Vier/Zwei-Hilfsventile. Nur wenn beide Hebel niedergedrückt und damit beide Hilfsventile in ihre Umschaltlage gebracht worden sind, gestattet das Ventil den Durchfluß der Druckluft vom Eintritts- zum Austrittskanal. Bei Druck im Austrittskanal wird die Kupplung der Presse eingerückt und eine Pressenbremse gelüftet. Sobald eines der Hilfsventile, beispielsweise durch Loslassen seines Handhebels, zurückgestellt wird, kehren der Steuer- und der Zusatzkolben in ihre Ausgangslage zurück, wodurch der Druck im Austrittskanal entfällt, indem diese Leitung über die beschriebenen Kanäle entlüftet wird. Da die einen Ausgänge der beiden Hilfsventile gemeinsam in den ersten Steuerkanal münden, wobei sie selbstverständlich schon vor diesem zu einer gemeinsamen Leitung zusammengefaßt sein können, reduziert sich der Druck im zusätzlichen Steuerkanal bzw. erreicht der Druck im zusätzlichen Steuerkanal seinen vollen Wert nicht, wenn aus einem der beiden ersten Ausgänge der beiden Hilfsventile kein Steuerdruck kommt. Dadurch wird zwar das erste Ventil geöffnet, jedoch kann die Druckluft trotzdem nicht zum Austrittskanal gelangen, weil das dritte Ventil aufgrund des zu geringen Druckes im dritten Gehäuseraum geschlossen bleibt.

In den Steuerkanal gelangt in jedem Fall der volle Druck unabhängig davon, ob der zweite Ausgang beider Hilfsventile oder nur einer davon Steuerluft abgibt. Man erreicht das durch die Zwischenschaltung eines Wechselventils, dessen Ausgang stets den vollen Druck in den Steuerkanal liefert. Auf diese Weise wird mit Sicherheit ausgeschlossen, daß bei einem Versagen eines der beiden Hilfsventile oder bei mangelhafter oder unterlassener Betätigung desselben Druckluft in den Austrittskanal und damit an Kupplung und Bremse der Presse gelangt.

In der Zeichnung ist ein Ausführungsbeispiel der Erfindung dargestellt. Es zeigen :

Figur 1　das Ventil in einer als « Ausgangsstellung » bezeichneten Stellung der beiden Kolben,

Figur 2　die sogenannte « Umschaltstellung » des Ventils,

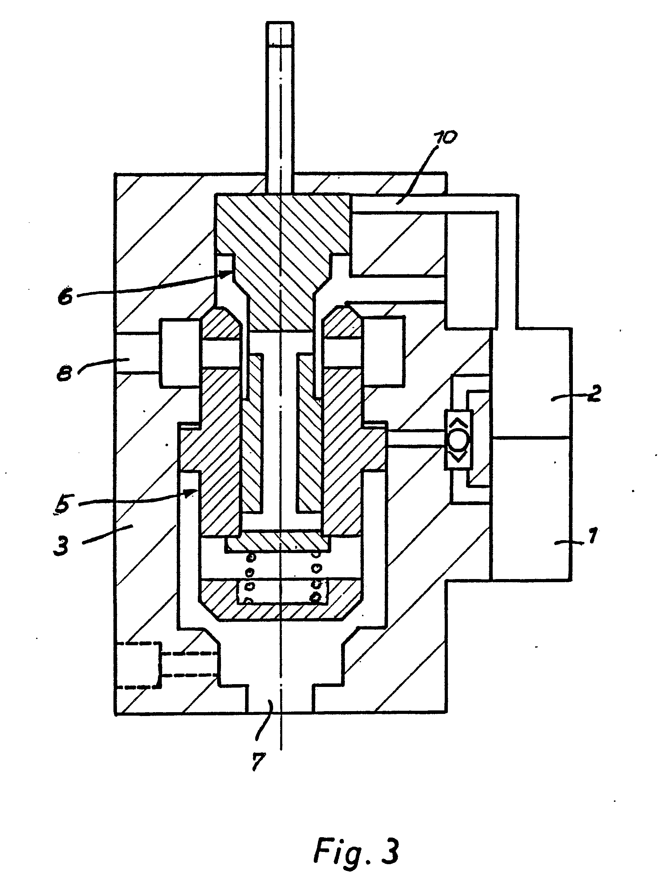

Figur 3　eine der theoretisch möglichen Fehlschaltungen des Ventils.

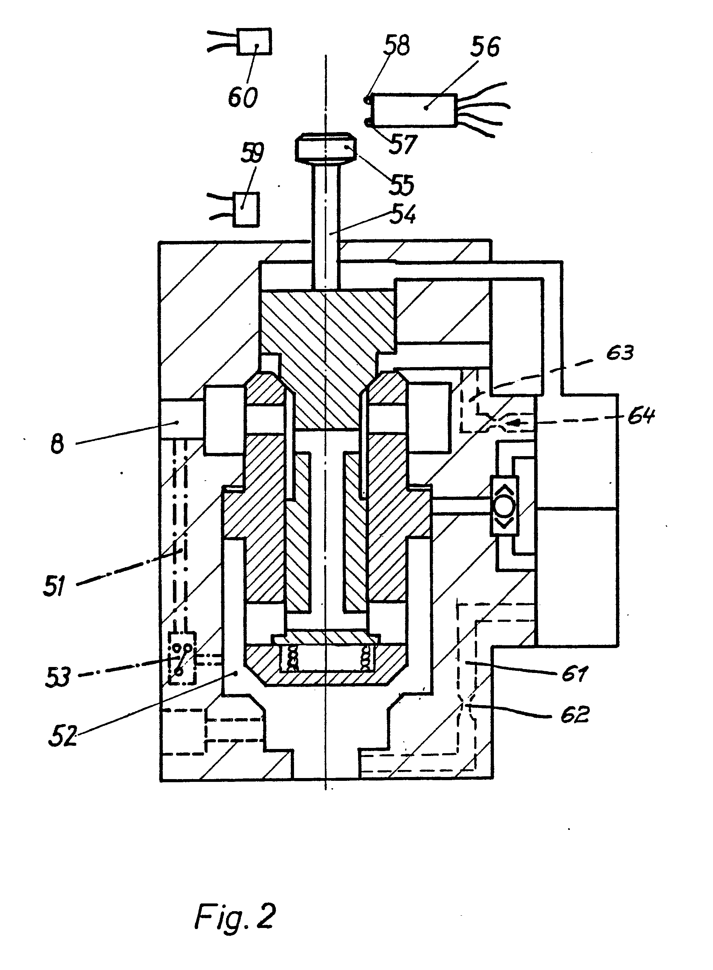

Das Ventil, welches zumindest teilweise einstückig mit zwei Hilfsventilen 1 und 2 eine Baueinheit bilden kann, die als sogenannte Vier/Zweiwege-Ventile ausgebildet sind, besteht im wesentlichen aus einem Gehäuse 3, einem darin im Sinne des Doppelpfeils 4 verschiebbaren Steuerkolben 5 und einem im Steuerkolben verschiebbar gelagerten Zusatzkolben 6. Ein unter Druck von einem nicht gezeigten Druckspeicher zugeführtes Medium — nachfolgend wird lediglich noch von Druckluft gesprochen — wird dem Ventil über den Eintrittskanal 7 zugeführt und verläßt es über den Austrittskanal 8, wenn der Steuer- und der Zusatzkolben die in Fig. 2 gezeigten Lagen, d. h. die sogenannte Umschaltstellung, eingenommen haben. Die Bewegung der Kolben erreicht man mittels der beiden Hilfsventile 1 und 2, deren Konstruktion bekannt ist und die von Hand, insbesondere über eine zwischengeschaltete Steuerung, möglichst gleichzeitig betätigt werden sollen.

Jedes der beiden Hilfsventile besitzt einen nicht gezeigten Eingang für Steuerluft, zwei Ausgänge und einen ebenfalls nicht dargestellten Entlastungskanal, der mit einem nachfolgend noch beschriebenen Entlüftungskanal 41 verbunden ist. In der einen Steuerstellung tritt die Druckluft beispielsweise an den ersten Ausgängen der beiden Hilfsventile aus, während sie in der anderen Steuerstellung an den zweiten Ausgängen herauskommt. Die ersten Ausgänge beider Hilfsventile sind zu einem gemeinsamen ersten Ausgang 9 zusammengefaßt, der über einen externen oder internen Kanal mit einem zusätzlichen Steuerkanal 10 des Ventils in pneumatischer Verbindung steht. Die beiden zweiten Ausgänge 11 und 12 der beiden Hilfsventile 1 und 2 führen zu einem Wechselventil 13, dessen Ausgang 14 mit einem Steuerkanal 15 des Ventils in pneumatischer Verbindung ist. Demnach kann man also mittels der beiden Hilfsventile 1 und 2 wechselweise Druck auf den zusätzlichen Steuerkanal 10 oder den Steuerkanal 15 geben.

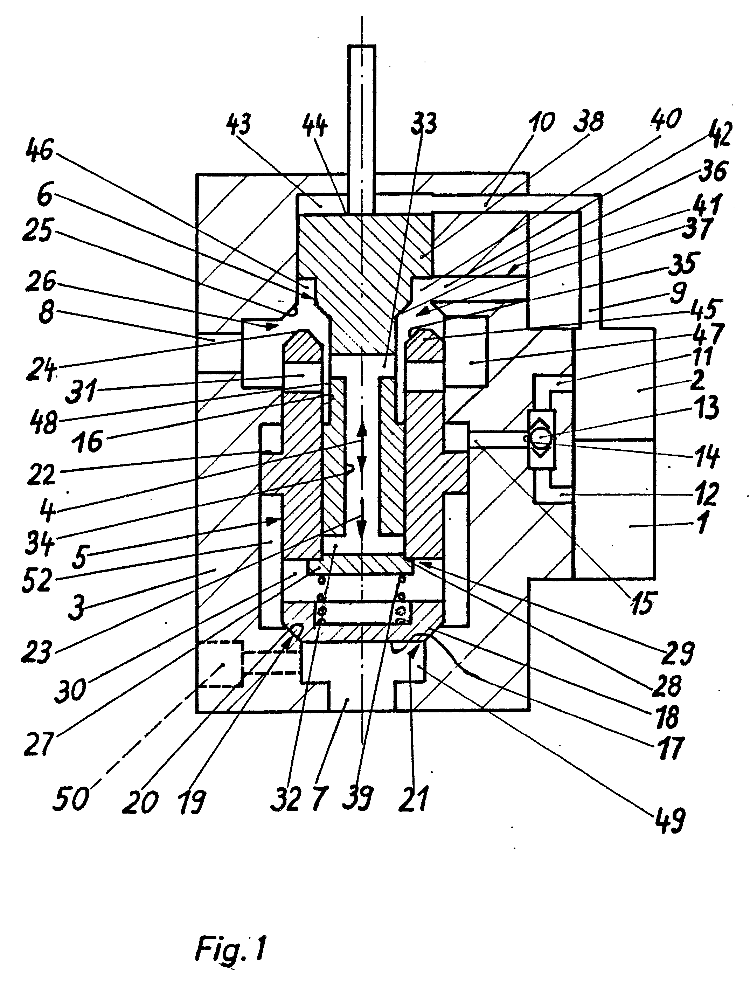

Der Steuerkolben 5 hat eine in Fig. 1 nach oben offene Höhlung 16, d. h. er besitzt eine etwa topfförmige Gestalt. Die Außenseite 17 des Topfbodens 18 ist als erstes Verschlußorgan 19 ausgebildet oder mit einem solchen verbunden. Es arbeitet mit einem ersten Ventilsitz 20 des Gehäuses 3 zusammen, wobei beide ein erstes Ventil 21 bilden. Der Steuerkolben 5 besitzt vorzugsweise in seinem mittleren Bereich eine Ringschulter 22. Wenn im zweiten Steuerkanal 15 ein Steuerdruck vorhanden ist, so drückt dieser über die Schulter 22 in Pfeilrichtung 23 gegen den ersten Ventilsitz 20, wodurch das erste Ventil 21 geschlossen wird bzw. bleibt. Dabei ist die in Pfeilrichtung 23 gerichtete Kraft größer als die in der Gegenrichtung wirkende, an der Außenseite des ersten Verschlußorgans 19 angreifende Kraft der Druckluft im Eintrittskanal 7.

Die Außenseite des Topfrandes des Steuerkolbens 5 ist als zweites Verschlußorgan 24 ausgebildet. Es bildet mit einem zweiten, am Gehäuse 3 vorgesehenen Ventilsitz 25, ein zweites Ventil 26. Dieses ist geschlossen, wenn man den Steuerkolben 5 entgegen dem Pfeil 23 in seine Umschaltendlage bringt, wobei dann das erste Ventil 21 voll geöffnet ist.

Das innere Ende des Zusatzkolbens 6 ist als drittes Verschlußorgan 27 ausgebildet bzw. mit einem solchen versehen, welches mit einem dritten Ventilsitz 28 ein drittes Ventil 29 bildet. Der dritte Ventilsitz 28 befindet sich innen am Steuerkolben 5. Bei geöffnetem ersten Ventil 21 strömt die Druckluft dem dritten Ventilsitz 28 über vorzugsweise mehrere, gleichmäßig am Umfang verteilte erste Radialkanäle 30 zu, und sie tritt über zweite Radialkanäle 31 aus dem Innern des Steuerkolbens 5 wieder aus. In analoger Weise besitzt der Zusatzkolben 6 erste Radialkanäle 32 und zweite Radialkanäle 33. Eine pneumatische Verbindung zwischen den ersten Kanälen 30 und 32 besteht jedoch nur, wenn das dritte Ventil 29 wenigstens teilweise geöffnet ist. Anders ist es hingegen bei den zweiten Radialkanälen 31 und 33, welche in jeder möglichen Verschiebelage der beiden Kolben 5 und 6 strömungsmäßig miteinander Verbindung haben. Im übrigen besteht aufgrund des Axialkanals 34 im Innern des Zusatzkolbens 6 eine Verbindung zwischen den ersten und zweiten Radialkanälen dieses Kolbens.

Die Innenseite des Topfrandes des Steuerkolbens 5 bildet einen vierten Ventilsitz 35, der mit einem vierten Verschlußorgan 36 ein viertes Ventil 37 ergibt. Das vierte Verschlußorgan kann durch eine Schulter des überstehenden freien Endes 38 des Zusatzkolbens 6 gebildet sein. Demnach ist also das vierte Ventil 37 geschlossen, wenn das dritte Ventil 29 vollständig geöffnet ist.

Zwischen den Steuerkolben 5 und den Zusatzkolben 6 ist eine Druckfeder 39 geschaltet. Sie stützt sich einerseits an der Innenseite des Topfbodens 18 und andererseits an der ihr zugewandten Fläche des dritten Verschlußorgans 27 ab. Demnach wird also das vierte Ventil 37 gegen den Widerstand dieser Druckfeder 39 geschlossen, wenn der erste Steuerkanal 10 druckbeaufschlagt und der zweite Steuerkanal 15 druckentlastet sind. Die Abströmseite 40 des vierten Ventils 37 ist mit einem Entlüftungskanal 41 verbunden, dessen innere Mündung 42 sich zwischen denjenigen der Steuerkanäle 10 und 15 befindet. Der erste Steuerkanal 10 mündet in einen dritten Gehäuseraum 43, der durch das Gehäuse einerseits und die Stirnfläche 44 des Zusatzkolbens 6 definiert ist.

Der Abströmkanal 8 mündet in einen durch das Gehäuse 3, das freie Ende 38 des Zusatzkolbens 6 und den Topfrand 45 des Steuerkolbens 5 gebildeten ringförmigen zweiten Gehäuseraum 46. Dieser ist bei geöffnetem zweiten Ventil 26 sowie geschlossenem vierten Ventil 37 über einen fünften Gehäuseraum 47 mit dem Austrittskanal 8 verbunden. Damit besteht also eine Entlüftungsmöglichkeit für den Austrittskanal 8 über den fünften und zweiten Gehäuseraum, wenn lediglich das zweite und nicht auch das vierte Ventil geschlossen ist.

Im Bereich der zweiten Radialkanäle 31 bzw. 33 des Steuerkolbens 5 und des Zusatzkolbens 6 befindet sich zwischen diesen beiden Radialkanälen ein vierter, als Ringraum gestalteter Gehäuseraum 48, der die Zuströmseite des vierten Ventils 37 bildet. Zu diesem Zweck kann man den Zusatzkolben 6 an der betreffenden Stelle mit einer genügend breiten, sich beidseits der zweiten Radialkanäle erstreckenden Außennut versehen.

In den Vordruckraum 49 des ersten Ventils 21 mündet ein nach außen gehender Hilfskanal 50, dessen äußeres Ende mit einem Speicher verbindbar ist. Da die Verbindung mit dem Speicher auch an anderer Stelle vorgesehen sein kann und es sich insofern um eine bevorzugte Ausgestaltung handelt, ist dieser Hilfskanal 50 in der Zeichnung mit gestrichelten Linien dargestellt. In Fig. 2 ist mit strichpunktierten Linien ein weiterer fakultativer Verbindungskanal 51 eingezeichnet. Er verbindet den Hinterdruckraum 51 des ersten Ventils 21 mit dem Austrittskanal 8. In diesen Verbindungskanal ist ein Druckschalter 53 eingesetzt, der in nicht dargestellter Weise mit einem Funktions- Überwachungsgerät verbunden ist. Diese Ausbildung findet vorzugsweise bei Verwendung eines pneumatischen Mediums Anwendung, jedoch ist sie auch bei hydraulischem Medium sinnvoll. In Abhängigkeit von den jeweils an den beiden Kanalenden herrschenden Drücken nimmt der Druckschalter 53 die eine oder andere Schaltstellung ein, und diese kann zu Anzeige- und Meldezwecken ausgenützt werden.

Eine andere Möglichkeit zur Überwachung der einwandfreien Funktion des Ventils, aber auch zum Anzeigen und Melden von Störungen des Ventils bzw. der Hilfsventile ergibt sich dadurch, daß der Zusatzkolben 6 mit einer durch das Gehäuse 3 hindurchgeführten Kolbenstange 54 ausgestattet wird, deren an ihrem außen gelegenen Teil angebrachtes Schaltglied 55 mit einem Schalter 56 zusammenwirkt, der mindestens zwei in Verschieberichtung 4 hintereinander gelegene Schaltpositionen 57 und 58 hat. Zweckmäßigerweise handelt es sich um einen berührungslosen Schalter. Der Abstand der beiden Schaltpositionen entspricht, wiederum in Verschieberichtung gerechnet, etwa der Relativbewegung der beiden Kolben 5 und 6. Der Schalter 56 befindet sich, in Verschieberichtung gesehen, zwischen zwei hintereinander angeordneten Zusatzschaltern 59 und 60. Bei ordnungsgemäßem Arbeiten dieses Ventils bewegen sich bei einem ersten Steuerbefehl der Steuerkolben 5 und der Zusatzkolben 6 gegeneinander, wodurch eine vergleichsweise kurze Relativbewegung stattfindet, die in vorteilhafter Weise zu einer starken Reduzierung der Umschaltzeit dieses Ventils um etwa 50 % führt. Wird nochmals umgesteuert, so bewegen sich die beiden Kolben wiederum gleichzeitig auseinander. Wenn nun einer dieser beiden Kolben hängenbleibt, so führt lediglich der andere seine Verschiebebewegung durch. In diesem Falle bewegt sich das Schaltglied 55 vom Schalter 56 weiter weg als bei Normalbetrieb, und es wird je nach auftretendem Fehler entweder dem Zusatzschalter 59 oder dem Zusatzschalter 60 bei Erreichen der Endposition des korrekt arbeitenden Kolbens zugeordnet. Dadurch führt dann der betreffende Zusatzschalter eine Schaltung aus, die zu Anzeige- und/oder Alarmzwecken ausgenutzt werden kann. Ausgehend beispielsweise von der in Fig. 2 gezeigten Umschaltstellung, würde das Schaltglied 55 dem Zusatzschalter 59 zugeordnet werden, wenn nach einem entsprechenden Steuerbefehl lediglich der Steuerkolben 5, nicht jedoch der Zusatzkolben 6 in die in Fig. 1 dargestellte Ausgangslage zurückkehren würde. Entsprechendes gilt bei einem Ausbleiben der Kolbenbewegung des Steuerkolbens 5.

Das erfindungsgemäße, mit den beiden Hilfsventilen ausgestattete Ventil, arbeitet wie folgt: In der in Fig. 1 dargestellten Ausgangsstellung steht am Eintrittskanal 7 das Druckmedium an, während der Austrittskanal 8 druckentlastet ist. Zugleich liefern die beiden Vier/Zweiwege-Zusatzventile einen Steuerdruck in den Steuerkanal 15, wodurch der Steuerkolben 5 gegen den anstehenden Druck im Eintrittskanal 7 über die Schulter 22 in Richtung des Pfeils 23 gedrückt wird, wodurch das erste Ventil 21 geschlossen bleibt. Auch das dritte Ventil 29 befindet sich in einer geschlossenen Stellung, während das zweite und das vierte Ventil 26 bzw. 37 beide geöffnet sind. Im zusätzlichen Steuerkanal 10 herrscht kein Druck. Dasselbe gilt auch für den Entlüftungskanal 41. Mit letzterem ist der Austrittskanal 8 über zwei Wege verbunden, nämlich einmal über den vierten Gehäuseraum 48 und das vierte Ventil 37, und zum anderen über den fünften Gehäuseraum 47 und das zweite Ventil 26.

Wenn man nun die beiden Hilfsventile 1 und 2 umsteuert, so wird der Druck aus dem Steuerkanal 15 genommen und der zusätzliche Steuerkanal 10 mit Druck beaufschlagt. Nunmehr kann sich der im Vordruckraum des ersten Ventils, also im Eintrittskanal 7 herrschende Druck des Mediums auswirken und den Steuerkolben 5 entgegen dem Pfeil 23 verschieben. Zugleich bewirkt aber der nunmehr im dritten Gehäuseraum 43 herrschende Druck von den beiden Hilfsventilen 1 und 2 eine gegenläufige Bewegung des Zusatzkolbens 6, also eine Verschiebung im Sinne des Pfeils 23. Am Ende dieser Verschiebungen ist der in Fig. 2 dargestellte Schaltzustand erreicht. Nunmehr sind das erste und dritte Ventil 21 bzw. 29 geöffnet, während die Ventile 26 und 37, d. h. das zweite und vierte Ventil, geschlossen sind. Infolgedessen kann das über den Eintrittskanal 7 einströmende Medium beide Kolben durchströmen und das Ventil über den Austrittskanal 8 wieder verlassen. Wenn die Hilfsventile 1 und 2 nochmals umgesteuert werden, erreicht man wieder die in Fig. 1 dargestellte Ausgangslage.

Wenn man in den zusammengefaßten Eingang 61 und den Haupt-Entlastungskanal 63 je ein Drosselelement 62 bzw. 64 einbaut, dann kann man beim Einsatz von zwei unterschiedlich gesteuerten Ventilen der erfindungsgemäßen Art Einschalt- bzw. Ausschaltverzögerungen der Bremse und der Kupplung einer Presse erreichen. Dabei wird immer nur jeweils eines der beiden Drosselelemente aktiviert.

**Patentansprüche**

1. Vorgesteuertes 3/2-Wege-Sitzventil, vorzugsweise ein Pressensicherheitsventil, mit einem Steuerkanal (15) für das Steuermedium, einem Eintrittskanal (7) sowie wenigstens einem Austrittskanal (8) für das durchfließende Medium, wobei in einem diese Kanäle aufweisenden Gehäuse (3) ein rohrförmiger Steuerkolben (5) verschiebbar gelagert ist, dessen eines Ende ein erstes Verschlußorgan (20) bildet, welches bei vollem Druck im Steuerkanal (15) an einem ersten Ventilsitz (20) anliegt und vom Druck des durchfließenden Mediums beaufschlagt ist, dadurch gekennzeichnet, daß die Höhlung (16) des Steuerkolbens (5) an ihrem dem ersten Ventilsitz (20) zugekehrten Ende mittels eines Topfbodens (18) verschlossen und über erste Radialkanäle (30) mit einem hinterdruckseitigen ersten, zwischen dem Steuerkolben (5) und dem Gehäuse (3) gebildeten, ringförmigen Gehäuseraum (52) verbunden ist, daß im Steuerkolben (5) ein durch eine Druckfeder (39) belasteter Zusatzkolben (6) verschiebbar gelagert ist, wobei die Druckfeder (39) zwischen den Topfboden (18) des Steuerkolbens (5) und das zugeordnete Ende des Zusatzkolbens (6) eingesetzt ist und der Topfboden (18) das erste Verschlußorgan (19) bildet, dessen zugehöriger erster Ventilsitz (20) sich im Ventilgehäuse (3) befindet, daß ferner der äußere Topfrand (45) des Steuerkolbens (5) ein zweites Verschlußorgan (24) bildet, das mit einem zweiten Ventilsitz (25) des Gehäuses (3) zusammenwirkt, daß das an der Druckfeder (39) anliegende Ende des Zusatzkolbens (6) ein drittes Verschlußorgan (27) bildet, das mit einem dritten Ventilsitz (28) zusammenwirkt, der sich am Übergang von der Höhlung (16) des Steuerkolbens (5) zu dessen ersten Radialkanälen (30) befindet, daß der Zusatzkolben (6) im Bereich des dritten Verschlußorgans (27) erste Radialkanäle (32) besitzt, die mit zweiten Radialkanälen (33) im Bereich des Topfrandes (45) des Steuerkolbens (5) über einen Axialkanal (34) verbunden sind, wobei über die ersten Radialkanäle (32) des Zusatzkolbens (6) dessen Axialkanal (34) lediglich bei wenigstens teilweise geöffnetem drittem Verschlußorgan (27) mit den ersten Radialkanälen (30) des Steuerkolbens (5) verbunden ist und die zweiten Radialkanäle (33) des Zusatzkolbens (6) dessen Axialkanal (34) mit einem zweiten ringförmigen Gehäuseraum (46) verbinden, der über den zweiten Ventilsitz (25) mit dem Austrittskanal (8) verbindbar ist, wobei der zweite Gehäuseraum (46) durch das Gehäuse (3), das verdickte, von der Druckfeder (39) abgewandte Ende (38) des Zusatzkolbens (6) und den Topfrand (45) des Steuerkolbens (5) gebildet ist und das zweite Verschlußorgan (24) bei geschlossenem ersten Verschlußorgan (19) vollständig geöffnet ist, daß außerdem ein zusätzlicher Steuerkanal (10) für das Steuermedium mit einem dritten Gehäuseraum (43) verbunden ist, der durch das Gehäuse (3) und das von der Druckfeder (39) abgewandte Ende (38) des Zusatzkolbens (6) gebildet ist, und daß der zweite Gehäuseraum (46) über einen Entlüftungskanal (41) mit einem Entlüftungsraum verbunden ist, daß ferner der Steuerdruck im Steuerkanal (15) entgegen dem Druck des durchfließenden Mediums auf den Steuerkolben (5) einwirkt und ein vierter Ventilsitz (35) am inneren Topfrand (45) des Steuerkolbens (5) mit einem vierten Verschlußorgan (36) am Zusatzkolben (6) zusammenwirkt, wobei bei druckbeaufschlagtem zusätzlichem Steuerkanal (10) und druckentlastetem Steuerkanal (15) das vierte Verschlußorgan (36) gegen den Widerstand der Druckfeder (39) geschlossen ist und die Abströmseite des vierten Ventilsitzes (35) mit dem Entlüftunskanal (41) verbunden ist, wobei sich ferner die innere Mündung des Entlüftungskanals (41) in Verschieberichtung (4) des Zusatzkolbens (6) gesehen, zwischen den beiden Steuerkanälen (10 und 15) befindet, und daß die zweiten Radialkanäle (33) des Zusatzkolbens (6) über einen vierten, ringförmigen · Gehäuseraum (48) mit dem vierten Ventilsitz (35) strömungsverbunden sind, der sich zwischen dem Steuerkolben (5) und dem Zusatzkolben (6) im Bereich der zweiten Radialkanäle (31) des Steuerkolbens (5) befindet.

2. Ventil nach Anspruch 1, dadurch gekennzeichnet, daß der Austrittskanal (8) in den durch das Gehäuse (3), das von der Druckfeder (39) abgewandte Ende (38) des Zusatzkolbens (6) und den Topfrand (45) des Steuerkolbens (5) gebildeten, ringförmigen zweiten Gehäuseraum (46) mündet, der bei geöffnetem zweiten Verschlußorgan (24) sowie geschlossenem vierten Verschlußorgan (36) über einen fünften Gehäuseraum (47) mit dem Austrittskanal (8) verbunden ist.

3. Ventil nach Anspruch 1 oder 2, dadurch gekennzeichnet, daß sich im Bereich der zweiten Radialkanäle (31, 33) des Steuerkolbens (5) und des Zusatzkolbens (6) zwischen diesen Radialkanälen der vierte, als Ringraum gestaltete Gehäuseraum (48) befindet, der die Zuströmseite des vierten Ventilsitzes (35) bildet.

4. Ventil nach wenigstens einem der vorhergehenden Ansprüche, dadurch gekennzeichnet, daß in den Vordruckraum (49) des ersten Ventilsitzes (20) ein nach außen gehender Hilfskanal (50) mündet, dessen äußeres Ende mit einem Speicher verbindbar ist.

5. Ventil nach wenigstens einem der vorhergehenden Ansprüche, dadurch gekennzeichnet, daß in einen Verbindungskanal (51) zwischen dem Austrittskanal (8) und dem Hinterdruckraum (52) des ersten Ventilsitzes (20) ein mit einem Funktions- Überwachungsgerät verbundener Druckschalter (53) eingesetzt ist.

6. Ventil nach wenigstens einem der vorhergehenden Ansprüche, dadurch gekennzeichnet, daß der Zusatzkolben (6) mit einer durch das Gehäuse (3) hindurchgeführten Kolbenstange (54) verbunden ist, deren an ihrem außen gelegenen Teil angebrachtes Schaltglied (55) mit einem Schalter (56) zusammenwirkt, der mindestens zwei in Verschieberichtung (4) hintereinander gelegene Schaltpositionen (57, 58) aufweist, wobei der Abstand der Schaltpositionen etwa dem der Relativbewegung der beiden Kolben (5, 6) entspricht.

7. Ventil nach wenigstens einem der vorhergehenden Ansprüche, dadurch gekennzeichnet, daß der Schalter (56) zwischen zwei, in Verschieberichtung gesehen, hintereinander angeordneten Zusatzschaltern (59, 60) gelegen ist, wobei im Falle einer Fehlfunktion am Ende des Kolbenhubs der korrekt arbeitenden Kolbens das Schaltglied (55) dem einen oder dem anderen Zusatzschalter zugeordnet ist.

8. Ventil nach wenigstens einem der vorhergehenden Ansprüche, mit zwei sogenannten Vier/Zweiwege-Hilfsventilen mit einem Eingang, zwei Ausgängen sowie einem Entlastungskanal, dadurch gekennzeichnet, daß die ersten Ausgänge beider Hilfsventile (1, 2) gemeinsam in den ersten Steuerkanal (10) münden und jeder zweite Ausgang (11, 12) der Hilfsventile an je einen Eingang eines Wechselventils (13) geführt ist, dessen Ausgang mit dem zweiten Steuerkanal (15) verbunden ist.

9. Ventil nach Anspruch 8, dadurch gekennzeichnet, daß in jedem der beiden Entlastungskanäle der beiden Vier/Zweiwege-Hilfsventile (1, 2) oder in einen gemeinsamen Haupt-Entlastungskanal (63) einerseits und in jeden der beiden Eingänge oder in einen zusammengefaßten Eingang (61) andererseits je ein Drosselelement (62, 64) eingesetzt ist.

## Claims

1. Servo-controlled 3/2-way seated valve, preferably a press safety valve, with a control port (15) for the control medium, an inlet port (7) and at least one outlet port (8) for the through-flowing medium, a housing (3) accomodating these ports having displaceably mounted within it a tubular control piston (5), one end of which constitutes a first occluding member (20) which, at full pressure in the control port (15), bears on a first valve seat (20) and is subject to the pressure of the through-flowing medium, characterised in that the cavity (16) in the control piston (5) at its end which is towards the first valve seat (20) is occluded by means of a recessed end member (18) and is connected via first radial ports (50) to a first annular housing space (52) disposed on the back pressure side between the control piston (5) and the housing (3) and that displaceably mounted in the control piston (5) and loaded by a thrust spring (39) there is an auxiliary piston (6), the thrust spring (39) being inserted between the recessed end member (18) of the control piston (5) and the associated end of the auxiliary piston (6), the recessed end member (18) constituting the first occluding member, the associated first valve seat (20) of which is disposed in the valve body (3) and in that furthermore the outer rim (45) of the control piston (5) constitutes a second occluding member (24) which co-operates with a second valve seat (25) of the valve body (3) and in that that end of the auxiliary piston (6) which bears on the thrust spring (39) forms a third occluding member (27) which co-operates with a third valve seat (28) which is disposed at the transition between the cavity (16) of the control piston (5) and the first radial ports (30) thereof and in that the auxiliary piston (6) has in the region of the third occluding member (27) first radial ports (32) which are connected to second radial ports (33) in the region of the rim (45) of the control piston (5) through an axial port (34), the first radial ports (32) of the auxiliary piston (6) connecting the axial port (34) thereof to the first radial ports (30) of the control piston (5) only when the third occluding member (27) is at least partially opened, the second radial ports (33) of the auxiliary piston (6) connecting the axial ports (34) thereof to a second annular housing space (46) adapted to be connected by the second valve seat (25) to the outlet port (8), the second housing space (46) being formed by the body (3), the thickened end (38) of the auxiliary piston (6) which is away from the thrust spring (39) and the rim (45) of the control piston (5), the second occluding member (24) being completely open while the first occluding member (19) is closed and in that furthermore an auxiliary control port (10) for control medium is connected to a third housing space (43) formed by the valve body (3) and the ends (38) of the auxiliary piston (6) which is remote from the thrust spring (39), and in that the second housing space (46) is connected to a venting space via a venting port (41) and in that furthermore the control pressure in the control port (15) acts on the control piston (5) against the thrust of the through-flowing medium, and in that a fourth valve seat (35) on the inner rim (45) of the control piston (5) cooperates with a fourth occluding member (36) on the auxiliary piston (6), pressure loading on the auxiliary control port (10) and the relief of pressure on the control port (15) . resulting in the fourth occluding member (36) being closed against the resistance of the thrust spring (39), the discharge side of the fourth valve seat (35) being connected to the venting port (41), the inner mouth of the venting port (41), when viewed in the direction of displacement (4) of the auxiliary piston (6), being furthermore located between the control ports (10 and 15) and in that the second radial ports (33) of the auxiliary piston (5) are connected via a fourth annular housing space (48) to the fourth valve seat (35) which is disposed between the control piston (5) and the auxiliary piston (6) in the region of the second radial ports (31) of the control piston (5).

2. Valve according to Claim 1, characterised in that the outlet port (8) discharges into the annular second housing space (46) formed by the body (3), the end (38) of the auxiliary piston (6) which is remote from the thrust spring (39) and the rim (45) of the control piston (5) and which, when the second occluding member (24) is opened and the fourth occluding member (36) is closed, is connected to the outlet port (8) via a fifth housing space (47).

3. Valve according to Claim 1 or 2, characterised in that the fourth housing space (48) which is constructed as an annular space is located in the region of the second radial ports (31, 33) of the control piston (5) and of the auxiliary piston (6) between these radial ports, the housing space (48) constituting the approach side of the fourth valve seat (35).

4. Valve according to at least one of the preceding Claims, characterised in that an outwardly extending auxiliary passage (50) of which the outer end can be connected to a storage means discharges into the inlet pressure space (49) of the first valve seat (20).

5. Valve according to at least one of the preceding Claims, characterised in that inserted into a communicating passage (51) between the outlet port (8) and the back pressure space (52) of the first valve seat (20) is a pressure switch (53) connected to a function monitoring device.

6. Valve according to at least one of the preceding Claims, characterised in that the auxiliary piston (6) is connected to a piston rod (54) extending through the body (3) and of which the switching member (55) mounted on its external part co-operates with a switch (56) having at least two switch positions (57, 58) located one after the other in the direction of movement (4), the interval between the switching positions corresponding substantially to the relative movement of the two pistons (5, 6).

7. Valve according to at least one of the preceding Claims, characterised in that the switch (56) is located between two auxiliary switches (59, 60) disposed one after the other when viewed in the direction of displacement, a malfunction at the end of the piston stroke of the correctly operating piston resulting in the switching member (55) being associated with one or other of the auxiliary switches.

8. Valve according to at least one of the preceding Claims, with two so-called 4/2-way auxiliary valves with one inlet, two outlets and also a relieving port, characterised in that the first outlets of both auxiliary valves (1, 2) jointly discharge into the first control port (10) and each second outlet (11, 12) of the auxiliary valves extend into in each case one inlet of a 2-way valve (13), the outlet of which is connected to the second control port (15).

9. Valve according to Claim 8, characterised in that a throttle element (62, 64) is inserted into each of the two relieving ports of the two 4/2-way auxiliary valves (1, 2) or in a common main relieving port (63) on the one hand and into each of the two inlets or into a combined inlet (61) on the other.

**Revendications**

1. Soupape à sièges à 3/2 voies, à commande préalable, de préférence soupape de sûreté pour presse, avec un canal de commande (15) pour l'agent de commande, un canal d'entrée (7), ainsi qu'au moins un canal de sortie (8) pour l'agent qui traverse la soupape, où, dans un boîtier (3) présentant ces canaux, est monté de manière déplaçable un piston de commande (5) de forme tubulaire, dont l'une des extrémités forme un premier organe obturateur (20) qui, pour une pleine pression dans le canal de commande (15), s'applique à un premier siège de soupape (20) et qui est sollicité par la pression de l'agent qui passe à travers la soupape, caractérisée en ce que le creux (16) du piston de commande (5) a son extrémité tournée vers le premier siège de soupape (20), est fermé au moyen d'un fond de pot (18) et est relié par de premiers canaux radiaux (30) à un premier espace de boîtier (52) annulaire, formé entre le piston de commande (5) et le boîtier (3), du côté aval ; en ce que, dans le piston de commande (5) est monté de manière déplaçable un piston supplémentaire (6) sollicité par un ressort de compression (39), le ressort de compression (39) étant monté entre le fond de pot (18) du piston de commande (5) et l'extrémité associée du piston supplémentaire (6) et où le fond de pot (18) forme le premier organe obturateur (19) dont le premier siège de soupape (20) correspondant se trouve dans le boîtier de soupape (3) ; en ce que, d'autre part, le bord de pot (45) extérieur du piston de commande (5) forme un deuxième organe obturateur (24) qui coopère avec un deuxième siège de soupape (25) du boîtier (3) ; en ce que l'extrémité du piston supplémentaire (6) s'appliquant au ressort de compression (39), forme un troisième organe obturateur (27) qui coopère avec un troisième siège de soupape (28) qui se trouve au passage du creux (16) du piston de commande (5), à ses premiers canaux radiaux (30) ; en ce que le piston supplémentaire (6) possède, dans la région du troisième organe obturateur (27), de premiers canaux radiaux (32) qui sont reliés à de seconds canaux radiaux (33) dans la région du bord de pot (45) du piston de commande (5), par un canal axial (34), où, en passant par les premiers canaux radiaux (32) du piston supplémentaire (6), son canal axial (34) est relié, seulement lorsque le troisième organe obturateur (27) est partiellement ouvert, aux premiers canaux radiaux (30) du piston de commande (5), et où les deuxièmes canaux radiaux (33) du piston supplémentaire (6) relient son canal axial (34) à un deuxième espace annulaire de boîtier (46) qui peut être relié, en passant par le deuxième siège de soupape (25), au canal de sortie (8), où le deuxième espace de boîtier (46) est formé par le boîtier (3), par l'extrémité épaissie (38), non tournée vers le ressort de compression (39), du piston supplémentaire (6) et par le bord de pot (45) du piston de commande (5), et où le deuxième organe obturateur (24) est complètement ouvert lorsque le premier organe obturateur (19) est fermé ; en ce que, par ailleurs, un canal de commande supplémentaire (10) pour l'agent de commande est relié à un troisième espace de boîtier (43) qui est formé par le boîtier (3) et par l'extrémité (38), non tournée vers le ressort de compression (39), du piston supplémentaire (6) ; et en ce que le deuxième espace de boîtier (46) est relié par un canal d'évent (41) à un premier espace d'évent ; en ce que, encore, la pression de commande agit dans le canal de commande (15), à l'encontre de la pression de l'agent qui traverse la soupape, sur le piston de commande (5) ; et en ce qu'un quatrième siège de soupape (35), au bord de pot (45) intérieur du piston de commande (5), coopère avec un quatrième organe obturateur (36) sur le piston supplémentaire (6), où, lorsque le canal de commande supplémentaire (10) est sollicité par la pression, et lorsque le canal de commande (15) est déchargé de la pression, le quatrième organe obturateur (36) est fermé à l'encontre de la résistance du ressort de compression (39), et où le côté écoulement du quatrième siège de soupape (35) est relié au canal d'évent (41) et où, d'autre part, le débouché intérieur du canal d'évent (41), vu dans la direction de déplacement (4) du piston supplémentaire (6), se trouve entre les deux canaux de commande (10 et 15) ; et en ce que les deuxièmes canaux radiaux (33) du piston supplémentaire (6) sont reliés pour l'écoulement, par un quatrième espace de boîtier annulaire (48), au quatrième siège de soupape (35) qui se trouve entre le piston de commande (5) et le piston supplémentaire (6), dans la région des deuxièmes canaux radiaux (31) du piston de commande (5).

2. Soupape suivant la revendication 1, caractérisée en ce que le canal de sortie (8) débouche dans le deuxième espace de boîtier (46) annulaire, formé par le boîtier (3), par l'extrémité (38) non tournée vers le ressort de compression (39), du piston supplémentaire (6) et par le bord de pot (45) du piston de commande (5), lequel espace (46) est relié, lorsque le deuxième organe obturateur (24) est ouvert et lorsque le quatrième organe obturateur (36) est fermé, par un cinquième espace de boîtier (47), au canal de sortie (8).

3. Soupape suivant la revendication 1 ou 2, caractérisée en ce que, dans la région des deuxièmes canaux radiaux (31, 33) du piston de commande (5) et du piston supplémentaire (6), se trouve, entre ces canaux radiaux, le quatrième espace de boîtier (48) conformé en espace annulaire, qui forme le côté d'arrivée du quatrième siège de soupape (35).

4. Soupape suivant au moins l'une des revendications précédentes, caractérisée en ce que, dans l'espace amont (49) du premier siège de soupape (20) débouche un canal auxiliaire (50) allant vers l'extérieur, dont l'extrémité extérieure peut être reliée à un accumulateur.

5. Soupape suivant l'une quelconque des revendications précédentes, caractérisée en ce que, dans un canal de liaison (51) entre le canal de sortie (8) et l'espace aval (52) du premier siège de soupape (20) est placé un commutateur fonctionnant par la pression (53), relié à un appareil de surveillance du fonctionnement.

6. Soupape suivant au moins une des revendications précédentes, caractérisée en ce que le piston supplémentaire (6) est relié à une tige de piston (54) passant à travers le boîtier (3), dont l'organe de commutation (55) adapté à sa partie placée à l'extérieur, coopère avec un commutateur (56) qui présente au moins deux positions de commutation (57, 58) placées l'une derrière l'autre dans la direction de déplacement (4), la distance entre les positions de commutation correspondant à peu près au mouvement relatif des deux pistons (5 et 6).

7. Soupape suivant au moins une des revendications précédentes, caractérisée en ce que le commutateur (56) est placé entre deux commutateurs supplémentaires (59, 60) disposés l'un derrière l'autre dans la direction de déplacement, où, en cas d'un défaut de fonctionnement à la fin de la course du piston qui travaille correctement, l'organe de commutation (55) est associé à l'un ou à l'autre des commutateurs supplémentaires.

8. Soupape suivant au moins une des revendications précédentes, avec deux soupapes auxiliaires, dites à quatre/deux voies, avec une entrée, deux sorties, ainsi qu'avec un canal de décharge, caractérisée en ce que les premières sorties des deux soupapes auxiliaires (1, 2) débouchent ensemble dans le premier canal de commande (10), et chaque deuxième sortie (11, 12) des soupapes auxiliaires est amenée respectivement à une entrée d'une soupape (13) à mouvement alternatif, dont la sortie est reliée au deuxième canal de commande (15).

9. Soupape suivant la revendication 8, caractérisée en ce que, dans chacun des deux canaux de décharge des deux soupapes auxiliaires à quatre/deux voies (1, 2) ou dans un canal de décharge principal commun (63) d'une part, et dans chacune des deux entrées ou dans une entrée combinée (61) d'autre part, est inséré chaque fois un élément d'étranglement (62, 64).

0 043 090

Fig. 1

Fig. 2

Fig. 3